# EUROPÄISCHE PATENTSCHRIFT

(11) **EP 2 628 971 B1**
(45) Veröffentlichungstag und Bekanntmachung des Hinweises auf die Patenterteilung: **03.02.2016**
(21) Anmeldenummer: 13155161.6
(22) Anmeldetag: 14.02.2013
(51) Int. Cl.: F16D 55/224, F16D 65/097

(54) **Scheibenbremse für ein Nutzfahrzeug**
Disc brake for a commercial vehicle
Frein à disque pour un véhicule utilitaire

(30) Priorität: 16.02.2012 DE 102012003109
(43) Veröffentlichungstag der Anmeldung: 21.08.2013
(73) Patentinhaber: KNORR-BREMSE Systeme für Nutzfahrzeuge GmbH, 80809 München (DE)
(72) Erfinder: Löw, Alfred, 94094 Rotthalmünster (DE)
(74) Vertreter: Schönmann, Kurt

(56) Entgegenhaltungen:
- WO-A1-2009/046818
- DE-A1-102008 027 052
- DE-B3-102007 051 153

## Beschreibung

Die Erfindung betrifft eine Scheibenbremse für ein Nutzfahrzeug nach dem Oberbegriff des Anspruchs 1.

Aus der DE 94 22 342 U1 ist eine gattungsgemäße Scheibenbremse bekannt. Der Haltebügel dieser Scheibenbremse dient in der Hauptsache als Widerlager für Belaghaltefedern, mit denen Bremsbeläge federnd in Belagschächten gehalten werden. Dabei ist der Haltebügel lösbar am Bremssattel befestigt, so dass sowohl eine Montage wie auch eine Demontage der Bremsbeläge problemlos möglich ist. Dies z.B., um einen für einen Bremsbelagwechsel notwendigen Zugriff auf die Bremsbeläge zu ermöglichen.

Hierzu trägt auch bei, dass der Haltebügel mit einfachen Mitteln an- und abzubauen ist, wozu er einerseits in eine taschenförmige Aufnahme des Bremssattels eingesteckt ist und andererseits mit dem Bremssattel, unter Überbrückung einer Montageöffnung für die Bremsbeläge, durch Befestigungsmittel verbunden ist.

Diese Befestigungsmittel bestehen im besagten Stand der Technik aus einem mit einem endseitigen Kopf versehenen Bolzen, der durch ein den Haltebügel in einer Öffnung durchtretendes Auge des Bremssattels geführt ist, einer auf das dem Kopf des Bolzens abgewandten Ende aufgesteckten Scheibe, die an dem Auge anliegt sowie einem den Bolzen und die Scheibe sichernden Splint, der durch eine Querbohrung des Bolzens geführt ist. Dabei ist der Bolzen oberhalb des Haltebügels positioniert und der Splint nach einem Umbiegen der freien Enden zur Verschiebesicherung zusätzlich mit einem Klebepunkt gesichert. Vergleichbare Scheibenbremsen sind in der WO 2009/046818 A1, der DE 10 2008 027 052 A1 sowie DE 10 2007 051 153 B3 offenbart.

Allerdings ist insbesondere die Montage des Befestigungselementes, aufgrund der Vielzahl der Einzelteile, relativ aufwändig und steht einer optimierten Herstellung der Scheibenbremse entgegen. Insbesondere, da Scheibenbremsen als Serienteile in großen Stückzahlen zum Einsatz kommen, kommt diesem Umstand eine besondere Bedeutung zu.

In diesem Sinne steht ebenso die Anzahl der Befestigungsteile hinsichtlich ihrer Beschaffungskosten einer stets angestrebten Kostenminimierung entgegen.

Aber auch die Demontage des Haltebügels bzw. des Befestigungselementes, um einen Bremsbelagwechsel durchzuführen, gestaltet sich relativ aufwändig, da die Klebverbindung zwischen dem Splint und dem Bolzen bzw. der Scheibe gelöst und die Aufspreizung der Splintenden beseitigt werden muss, was naturgemäß nur mit einem entsprechenden zeitlichen Aufwand möglich ist, unter Zuhilfenahme geeigneter Werkzeuge.

Aus der DE 20 2008 013 446 U1 ist ein einstückiges Befestigungselement in Form einer Blattfeder bekannt, die mit dem Haltebügel verbunden ist.

Die DE 10 2005 044 091 A1 offenbart als einstückiges Befestigungselement einen Sprengring bzw. einen Sicherungsring, der mit einem angeformten Bolzen des Bremssattels in Eingriff steht und so den Haltebügel sichert.

Die DE 10 2005 045 877 B3 zeigt und beschreibt zur Haltebügelsicherung eine sowohl mit dem Bremssattel wie auch mit dem Haltebügel korrespondierende Feder als Befestigungselement.

Einen vergleichbaren Stand der Technik offenbart die DE 10 2006 002 306 A1, in der zur Verschiebesicherung des Haltebügels eine damit in Eingriff stehende Feder vorgesehen ist, die sich am Bremssattel abstützt.

Der Erfindung liegt die Aufgabe zugrunde, eine Scheibenbremse der gattungsgemäßen Art so weiterzuentwickeln, dass sie kostengünstiger herstellbar ist und eine einfachere und schnellere Montage bzw. Demontage der Bremsbeläge möglich ist.

Diese Aufgabe wird durch eine Scheibenbremse mit den Merkmalen des Anspruchs 1 gelöst.

Durch die einstückige Ausbildung des Befestigungselementes, das in seiner äußeren Form im Wesentlichen dem aus dem Stand der Technik bekannten Bolzen entspricht, ist zunächst einmal eine sehr einfache Herstellung des Befestigungselementes möglich.

Dabei besteht das Befestigungselement aus einer Hülse, mit einem angeformten Kragen, der umlaufend oder partiell ausgebildet sein kann und an einer Flanke des Haltebügels anliegt. Die Rastzunge, vorzugsweise radial federnd auslenkbar, tritt in Funktion nach außen und liegt mit einem Anschlag entweder an der anderen Flanke des Haltebügels oder an einer Seite des Auges des Bremssattels an, so dass insgesamt das Befestigungselement verschiebegesichert gehalten ist, wobei es, bezogen auf den Bremssattel, wie bisher auf der Oberseite des Haltebügels anliegt.

Die das Befestigungselement bildende Hülse ist nach einem weiteren Gedanken der Erfindung als Blechformteil ausgebildet. Dabei kann der Kragen ebenso wie die Rastzunge durch Umformen hergestellt sein. Um eine ausreichende Formstabilität zu erhalten, ist die Hülse derart verformt, dass sich ein Innensteg herausbildet, der sich über den gesamten lichten Durchmesser erstreckt und so ein Verformen der Hülse bei einer ungünstigen Belastung verhindert.

Ferner können zwei symmetrisch zum Innensteg angeordnete Rastzungen ausgebildet sein, die bevorzugt einen Winkel von etwa 90° einschließen. Die in montierter Stellung stehenden Rastzungen bilden in einem gewissen Verdrehbereich der Hülse einen Anschlag im Zusammenwirken mit dem Haltebügel, der eine rinnenförmige Verformung aufweist, in der die Hülse einliegt.

Die Herstellung der Hülse als Blechformteil lässt sich mit sehr geringem und damit kostenminimiertem Aufwand realisieren. Dazu werden zunächst die Rastzungen durch Ausklinken und Verbiegen angeformt, nachfolgend der Innensteg aufgestellt und danach die Hülse gerollt. Dies kann im Wesentlichen unterbrechungsfrei in einer kurzen Fertigungsschrittfolge durchgeführt werden. Als Einsatzmaterial kann ein Blech mit einer Dicke von 1 - 1,5 mm Verwendung finden.

Neben der außerordentlich günstigen Herstellung des Befestigungselementes zeichnet sich die Erfindung durch dessen einfache und schnelle Montage aus. Nach einem Einstecken des Befestigungselements in die entsprechende Öffnung, d.h. Durchgangsbohrung des Bremssattel-Auges, bringt sich die Rastzunge aufgrund ihrer federnden Rückstellung quasi automatisch in die Arretierstellung, so dass im Zusammenwirken mit dem andererseits an dem Auge anliegenden Kragen eine zuverlässige Verbindung des Befestigungselementes am Bremssattel gegeben ist.

Die bislang erforderlichen Arbeiten hierzu, nämlich das Einstecken des Bolzens in die Öffnung, das Aufstecken der Scheibe, das Einsetzen des Splintes und Umbiegen zumindest eines Endes sowie das Aufbringen eines Klebetropfens, können mit Ausnahme des Einsteckens der Hülse vollständig entfallen. Dabei kann diese Montage händisch erfolgen, ohne Zuhilfenahme eines Werkzeuges.

Dazu ist die Länge der Rastzunge so ausgelegt, dass lediglich eine geringe Kraft benötigt wird, um sie radial nach innen zu drücken, andererseits jedoch ausreichend Federspannung vorhanden ist, damit die Rastzunge nach der Montage in ihre Ausgangs-, d.h. dann Arretierposition zurückgeführt wird.

Zur Erleichterung des Einsteckens der Hülse in die Öffnung kann die Rastzunge einführseitig eine Einlaufschräge aufweisen, die durch eine geeignete Formgebung bei der Herstellung der Hülse ausgeführt werden kann.

Die genannten Vorteile bei der Montage der Hülse ergeben sich gleichermaßen bei einer Demontage, da dazu lediglich die Rastzunge radial eingedrückt werden muss, unter Überwindung der Rückstellkraft, so dass die Hülse problemlos herausgezogen werden kann. Im Übrigen erfolgt dies alles beschädigungsfrei, so dass die Hülse ohne weiteres wiederverwendbar ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Ausschnitt einer erfindungsgemäßen Scheibenbremse in einer teilweise geschnittenen Draufsicht
- Figur 2: einen vergrößerten Teilschnitt der Scheibenbremse entsprechend der Linie II-II in Figur 1

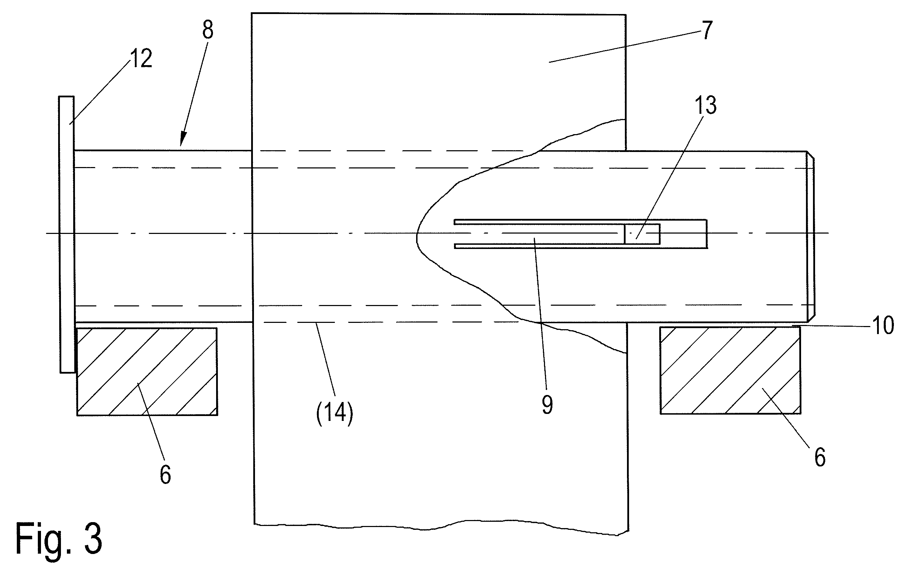

- Figur 3: einen weiteren vergrößerten Teilschnitt der Scheibenbremse, entsprechend der Linie III-III in Figur 1
- Figur 4: Schnitt-Teilstellung nach Figur 3 in verschiedenen Montagestellungen.

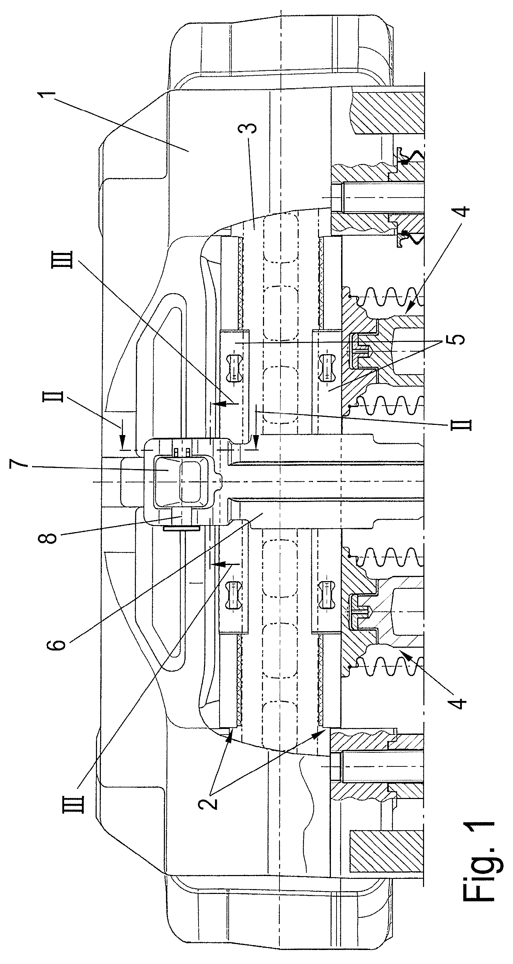

In der Figur 1 ist in einem Teilausschnitt eine Scheibenbremse für ein Nutzfahrzeug dargestellt, mit einem eine Bremsscheibe 3 umfassenden Bremssattel 1, in dem Bremsbeläge 2 angeordnet sind, die bei einer Bremsung an die Bremsscheibe 3 gepresst werden, wozu zwei parallel und abständig zueinander angeordnete, an einem Bremsbelag 2 angreifende Bremsstempel 4 vorgesehen sind, die über einen nicht dargestellten Bremshebel betätigbar sind.

Zur radialen Verspannung der Bremsbeläge 2 sind Belaghaltefedern 5 an den Bremsbelägen 2 befestigt, die sich an der Unterseite eines Haltebügels 6 abstützen.

Dieser Haltebügel 6 erstreckt sich quer zur Drehrichtung der Bremsscheibe 3 und überspannt dabei eine Montageöffnung des Bremssattels 1, wobei er an einer Seite des Bremssattels 1 beispielsweise in einer nicht dargestellten taschenförmigen Aufnahme anliegt, während das andere Ende an einem angeformten Auge 7 des Bremssattels 1 gehalten ist.

Hierzu ist ein Befestigungselement, das im Ausführungsbeispiel als eine im Querschnitt runde Hülse 8 ausgebildet ist, in eine Durchgangsbohrung 14 des Auges 7 eingesteckt und darin durch angeformte federnde Rastzungen 13 im Zusammenwirken mit einem endseitig angeformten Kragen 12 axial gesichert gehalten.

Während sich die Rastzunge 9 mit einem gegengerichtet abgewinkelten Anschlaghaken 13 an einer Außenfläche des Auges 7 abstützt, liegt der Kragen 12 an einer Flanke des Haltebügels 6 an.

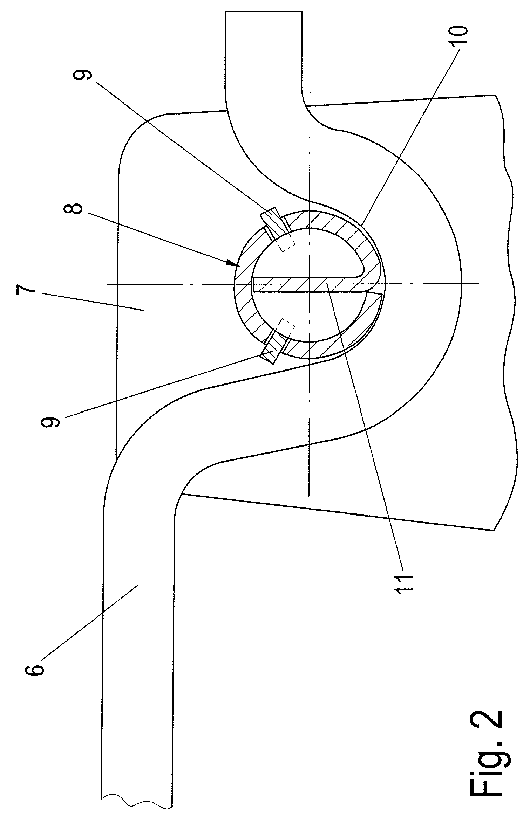

Wie insbesondere in der Figur 2 sehr deutlich zu erkennen ist, liegt die Hülse 8 in einer Rinne 10 des Haltebügels 6 ein. In dieser Figur ist auch zu sehen, dass in der Ausführungsvariante zwei parallel zueinander verlaufende Rastzungen 9 vorgesehen sind, die in einem Winkel von etwa 90° zueinander angeordnet sind, bezogen auf dem Umfang der Hülse 8, und so, im Zusammenspiel mit der Rinne 10, einen Anschlag gegen ein Verdrehen der Hülse 8 bilden.

Dadurch wird eine verformungssteife Positionierung erreicht, die durch einen Innensteg 11 bewirkt wird, der sich über den gesamten lichten Querschnitt der Hülse 8 erstreckt und der im Bereich der Winkelhalbierenden zwischen den beiden Rastzungen 9 angeordnet ist. Die Versteifung der Hülse 8 ermöglicht auch eine einfache Demontage, beispielsweise um die Bremsbeläge 2 zu wechseln.

Erfindungsgemäß ist das durch die Hülse 8 gebildete Befestigungselement zusammen mit den Rastzungen 9 einstückig ausgebildet und bevorzugt aus einem Blech hergestellt, wobei bei der Herstellung durch Verformen auch der Innensteg 11 ausgebildet wird.

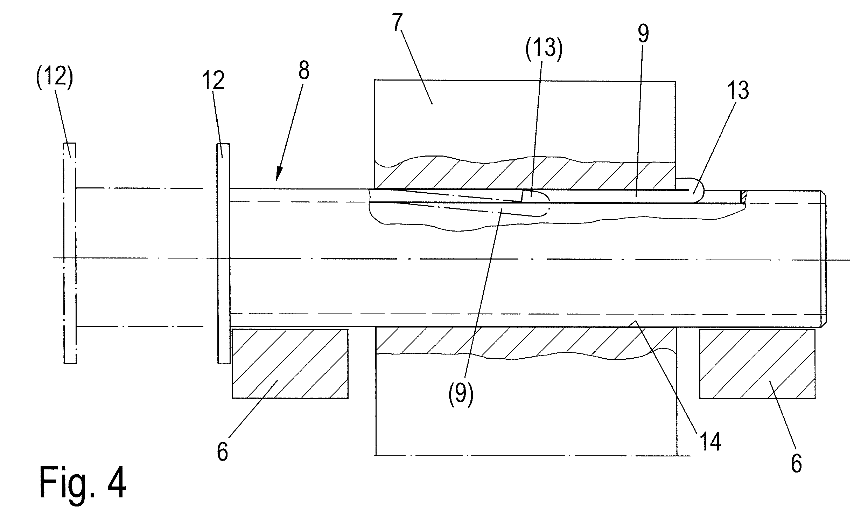

Die Montagefolge der Hülse 8 ist in der Figur 4 dargestellt, wobei die strichpunktierte Abbildung eine teilweise eingeschobene Stellung der Hülse 8 wiedergibt, während die Darstellung in Volllinie die Endstellung der Hülse 8 zeigt.

Es ist erkennbar, dass während des Einschiebens der Anschlaghaken 13 an der Wandung der Bohrung 14 anliegt, unter radialer Verbiegung der Rastzunge 9 nach innen. In der Endposition ist die Rastzunge 9 aufgrund der innewohnenden Rückstellkräfte selbständig in ihre Ausgangsposition geführt, in der der Anschlaghaken 13 an der entsprechenden Außenwand des Auges 7 anliegt. In dieser Stellung stützt sich der Kragen 12 an der zugeordneten Außenflanke des Haltebügels 6 ab.

Um die Hülse ohne Werkzeug montieren zu können, ist die Länge der jeweiligen Rastzunge so bemessen, dass beim Einführen der Hülse ein ausreichend großes Biegemoment aufgebracht wird, um die Rastzunge niederzudrücken, andererseits eine ausreichende Elastizität vorhanden ist, die die Rastzunge nach Erreichen der Endposition, also nach einem vollständigen Einstecken in die Öffnung 14 in eine Rastposition zurückbringt.

### Bezugszeichenliste

- 1: Bremssattel
- 2: Bremsbelag
- 3: Bremsscheibe
- 4: Bremsstempel
- 5: Belaghaltefeder
- 6: Haltebügel
- 7: Auge
- 8: Hülse
- 9: Rastzunge
- 10: Rinne
- 11: Innensteg
- 12: Kragen
- 13: Anschlaghaken
- 14: Bohrung

## Patentansprüche

1. Scheibenbremse für ein Nutzfahrzeug, mit einem einen Aufnahmeraum für eine Zuspanneinrichtung aufweisenden Bremssattel (1), der eine mit Bremsbelägen (2) in Wirkverbindung bringbare Bremsscheibe (3) übergreift, mit einem lösbar am Bremssattel (1) befestigten Haltebügel (6), an dem sich auf die Außenkante der Bremsbeläge (2) einwirkende Belaghaltefedern (5) abstützen, wobei der Haltebügel (6) mit einem Ende mittels eines einstückig ausgebildeten Befestigungselementes im Bremssattel (1) gehalten ist, **dadurch gekennzeichnet, dass** das Befestigungselement als Hülse (8) ausgebildet ist und zur Verschiebesicherung mindestens eine Rastzunge (9) aufweist, die mit dem Bremssattel (1) korrespondiert, wobei die Hülse an dem der Rastzunge (9) gegenüberliegenden Ende mit einem angeformten, einen axialen Anschlag bildenden Kragen (12) versehen ist.

2. Scheibenbremse nach Anspruch 1, **dadurch gekennzeichnet, dass** die Rastzunge (9) an ihrem freien Ende mit einem Anschlaghaken (13) versehen ist, der an einer Außenseite eines Auges (7) des Bremssattels (1) oder an einer Außenflanke des Haltebügels (6) anliegt.

3. Scheibenbremse nach Anspruch 1 oder 2, **dadurch gekennzeichnet, dass** die Hülse (8) als Blechformteil ausgebildet ist.

4. Scheibenbremse nach einem der vorhergehenden Ansprüche, **dadurch gekennzeichnet, dass** zwei parallel zueinander verlaufende Rastzungen (9) vorgesehen sind.

5. Scheibenbremse nach einem der vorhergehenden Ansprüche, **dadurch gekennzeichnet, dass** die Hülse (8) einen Innensteg (11) aufweist, der sich über den gesamten lichten Durchmesser der Hülse (8) erstreckt.

6. Scheibenbremse nach Anspruch 5, **dadurch gekennzeichnet, dass** der Innensteg (11) zwischen den beiden Rastzungen (9) angeordnet ist, vorzugsweise im Bereich der Winkelhalbierenden.

7. Scheibenbremse nach einem der vorhergehenden Ansprüche, **dadurch gekennzeichnet, dass** die Hülse (8) eine Wanddicke von 1 - 1,5 mm aufweist.

8. Scheibenbremse nach einem der vorhergehenden Ansprüche, **dadurch gekennzeichnet, dass** die Hülse (8) im Querschnitt rund ist.

9. Scheibenbremse nach einem der vorhergehenden Ansprüche, **dadurch gekennzeichnet, dass** die Rastzunge (9) in ihrer Länge so bemessen ist, dass sie ohne Werkzeug radial eindrückbar ist und bei Entlastung in ihre Ausgangsstellung zurückschwingt.

## Claims

1. Disc brake for a commercial vehicle, with a brake calliper (1) having a receiving space for an application means, which engages over a brake disc (3) that can be brought into operational connection with brake linings (2), with a retaining bracket (6) detachably fixed to the brake calliper (1), on which retaining bracket (6) lining retainer springs (5) acting on the outer edge of the brake linings (2) rest, wherein the retaining bracket (6) is held with one end in the brake calliper (1) by means of an integrally formed fixing element, **characterised in that** the fixing element is configured as a sleeve (8) and has at least one engagement tongue (9) for displacement security, the engagement tongue (9) corresponding to the brake calliper (1), wherein the sleeve is provided at the end lying opposite the engagement tongue (9) with a collar (12) formed thereon and forming an axial stop.

2. Disc brake according to claim 1, **characterised in that** the engagement tongue (9) is provided at its free end with a stop hook (13) which lies against an outer side of an eye (7) of the brake calliper (1) or against an outer flank of the retaining bracket (6).

3. Disc brake according to claim 1 or 2, **characterised in that** the sleeve (8) is configured as a sheet metal formed part.

4. Disc brake according to one of the preceding claims, **characterised in that** two engagement tongues (9) extending parallel to each other are provided.

5. Disc brake according to one of the preceding claims, **characterised in that** the sleeve (8) has an inner web (11) which extends over the whole inside diameter of the sleeve (8).

6. Disc brake according to claim 5,
**characterised in that** the inner web (11) is arranged between the two engagement tongues (9), preferably in the region of the angle bisector.

7. Disc brake according to one of the preceding claims, **characterised in that** the sleeve (8) has a wall thickness of 1 -1.5 mm.

8. Disc brake according to one of the preceding claims, **characterised in that** the sleeve (8) has a round cross-section.

9. Disc brake according to one of the preceding claims, **characterised in that** the engagement tongue (9) has such a length that it can be radially pressed in without a tool and pivots back to its starting position upon release.

## Revendications

1. Frein à disque pour un véhicule utilitaire, comprenant un étrier de frein (1), doté d'un espace de réception pour un moyen de serrage, qui chevauche un disque de frein (3) apte à être porté en connexion opérationnelle avec des garnitures de frein (2), et comprenant une patte de support (6) fixée, de manière détachable, audit étrier de frein (1) et auquel s'appuient des ressort de retenue de garniture (5), qui agissent sur le bord extérieur desdites garniture de frein (2), dans lequel ladite patte de support est retenue par une extrémité dans ledit étrier de frein moyennant un élément de fixation à configuration en une seule pièce, **caractérisé en ce que** ledit élément de fixation est configuré sous forme d'une douille (8) et présente au moins une languette d'enclenchement (9), qui se trouve en correspondance avec ledit étrier de frein (1), à ladite douille étant munie, à son extrémité opposée à ladite languette d'enclenchement, d'un collet (12) constituant une butée axiale.

2. Frein à disque selon la revendication 1, **caractérisé en ce que** ladite languette d'enclenchement (9) est muni d'un crochet d'amarrage (13) à son extrémité libre, qui porte contre un côté extérieur d'un oeillet (7) dudit étrier de frein (1) ou contre un flanc extérieur de ladite patte de support (6).

3. Frein à disque selon la revendication 1 ou 2, **caractérisé en ce que** ladite douille (8) est configurée sous forme d'une pièce façonnée en tôle.

4. Frein à disque selon une quelconque des revendications précédentes, **caractérisé en ce que** deux languettes d'enclenchement (9) sont formées, qui s'étendent en parallèle l'une à l'autre.

5. Frein à disque selon une quelconque des revendications précédentes, **caractérisé en ce que** ladite douille (8) présente une traverse intérieure (11), qui s'étend sur tout le diamètre libre de ladite douille (8).

6. Frein à disque selon la revendication 5, **caractérisé en ce que** ladite traverse intérieure (11) est disposée entre lesdites deux languettes d'enclenchement (9), de préférence dans la zone de la bissectrice.

7. Frein à disque selon une quelconque des revendications précédentes, **caractérisé en ce que** ladite douille (8) a une épaisseur de paroi de 1 à 1,5 mm.

8. Frein à disque selon une quelconque des revendications précédentes, **caractérisé en ce que** ladite douille (8) a une section transversale ronde.

9. Frein à disque selon une quelconque des revendications précédentes, **caractérisé en ce que** ladite languette d'enclenchement (9) a une longueur si dimensionnée, qu'elle soit radialement écrasable sans outil et qu'elle bascule en retour en sa position de départ en réponse au déchargement.
